# EUROPEAN PATENT SPECIFICATION

(11) **EP 1 649 792 B1**
(45) Date of publication and mention of the grant of the patent: **13.07.2011**
(21) Application number: 05256523.1
(22) Date of filing: 21.10.2005
(51) Int. Cl.: A47J 27/21

(54) **Liquid heating vessel**
Flüssigkeitserhitzungsgerät
Bouilloire

(30) Priority: 21.10.2004 GB 0423428
(43) Date of publication of application: 26.04.2006
(73) Proprietor: STRIX LIMITED, Ronaldsway, Isle of Man IM9 2RG (GB)
(72) Inventor: Garvey, Vincent Joseph, Douglas Isle of Man IM1 1BD (GB); Scott, Michael James, Isle of Man IM9 5PH (GB)
(74) Representative: Samuels, Adrian James

(56) References cited:
- EP-A- 0 841 030
- WO-A-01/80698
- WO-A-96/18331
- GB-A- 2 342 848

## Description

The present invention relates to the mounting of heaters in liquid heating vessels, and in particular to liquid heating vessels having a heater plate clamped to a lower wall portion of the vessel.

GB-A-2 342 848 provides an example of securing a planar heating element into a water heating vessel using a grommet seal and clips bearing upon the seal.

Another example of such a liquid heating vessel is disclosed in WO 96/18331 which describes the Applicant's successful Sure Seal system. In the arrangement disclosed in that document, the metallic heater plate has a peripheral channel grippingly receiving a portion of a plastics vessel wall and clamping a sealing ring between a wall of the channel and the vessel wall.

In typical liquid heating vessels the heater plate is made of a corrosion resistant metal such as stainless steel and has an underfloor heating element. The inside of such vessels is therefore easy to clean. However, the cost of manufacturing a heater plate in stainless steel is high.

To reduce material costs, the Applicant has sought to reduce the thickness of the stainless steel heating plate. Whilst this does considerably reduce costs, it has the potential to give rise to a new problem associated with the reduced strength of a thin stainless steel heater plate, particularly in relation to the plate clamping to a vessel wall to provide a watertight seal between the plate and the vessel wall.

The present invention seeks to alleviate this problem, and from a first aspect provides a liquid heating vessel comprising a heater plate for closing an opening in the base of the vessel and clamping means separate from the heater plate, as is defined by claim 1.

Thus with an arrangement in accordance with the invention it is the separate clamping means which provides the necessary strength to clamp the heater plate to the vessel wall. With a separate clamping means the plate thickness may therefore be reduced without an adverse effect on the clamping of the heater plate to the vessel wall resulting from the consequential reduction in strength of the plate.

The heater plate may be made of any metallic material but it is preferably made of stainless steel. The separate clamping means has the further advantage of reducing material costs because this arrangement does not require the heater plate to extend out to form a peripheral clamping channel, as in known arrangements. Since the clamping means need not contact the water it can be of a cheaper material e.g. mild steel preferably a zinc-coated mild steel such as Zintec (TM).

As explained above, the thickness of the heater plate material may be reduced without causing mounting problems by providing a separate clamping means. In known liquid heating vessels of the type discussed above, comprising a peripheral clamping channel provided by the heater plate, the thickness of a flat stainless steel plate is typically 1.0-1.5 mm. The plate thickness may be reduced to 0.5-0.8 mm if stiffening is provided, for example, by the peripheral Sure Seal channel. In preferred embodiments of the present invention however the heater plate is substantially equal to or less than 0.4 mm thick. Preferably the heater plate has a thickness substantially equal to 0.2 mm. The heater plate may be as thin as 0.15 mm. This results in a large saving in material costs by reducing the amount of material needed across the whole plate, in addition to the saving in material at the periphery of the plate.

Liquid heating vessels with metallic bases and plastic vessel walls typically comprise a sealing means clamped between a wall of the peripheral channel in the plate and the vessel wall so as to provide a watertight seal between the plate and the vessel wall, and to thermally insulate the vessel wall from the heater plate. In a preferred embodiment the liquid heating vessel of the invention further comprises a sealing means clamped against the peripheral portion of the heater plate. It is further preferred that the sealing means is clamped between the lower vessel wall portion and the peripheral portion of the heater plate. The sealing means therefore helps to thermally insulate the plastics material of the vessel wall from the heater plate.

In preferred embodiments the peripheral portion of the heater plate comprises a downwardly depending portion having a lip. The lip can rest in the clamping means beneath the vessel wall or beneath a sealing means that is clamped between the vessel wall and the peripheral portion of the heater plate. Preferably the lip comprises one or more circumferentially spaced tabs for engagement beneath the lower portion of the vessel wall. This provides sufficient location and engagement of the heater plate beneath the vessel wall without requiring the larger material cost of a whole annular flange.

The clamping means may be made of the same material as the heater plate but as mentioned above preferably the clamping means is made of a different material to the heater plate. As mentioned above this has the advantage of allowing the material costs to be reduced by employing a cheaper material for the clamping means. The clamping means may be made of any suitable metallic or plastics material.

The clamping means may be made of a resilient material and it may be stretched around the vessel wall and the peripheral portion of the heater plate so as to provide a resilient clamping force clamping together the two parts. However the clamping means may also be made of a stiff material which can then be crimped inwardly to grip and clamp together tightly the vessel wall and the heater plate.

Although the clamping means may be made of any suitable non-brittle metallic or plastics material, it is preferably made of metal for strength and stiffness. Any suitable metal could be used, for example aluminium, copper, nickel or alloys thereof. Preferably though, the clamping means comprises mild steel, either untreated or coated e.g. with zinc, so that it is cheap and easy to manufacture.

The Applicant has appreciated that such a clamping means made from a metallic material has a relatively high thermal mass compared to the plastics of the vessel wall and therefore provides a further advantage in that the thermal mass of the clamping means can act as a heat sink. It is therefore preferable that the clamping means is of a different material to the vessel wall so as preferentially to absorb heat from the heater plate. This can help to prevent the vessel wall from overheating.

The thermal mass is therefore able to help keep the vessel wall cool where it is in contact with the heater plate around its periphery. Convective cooling of the heater plate by liquid contained in the vessel will absorb rapid changes in temperature as the liquid heats up. However, if the liquid is being kept at a particular temperature, e.g. 80 °C for making coffee, the thermal mass provides a heat sink which can steadily absorb heat output by the heater. Furthermore the thermal mass can help to protect the vessel wall in the event of the heater overheating e.g. by being switched on dry.

Preferably the heater plate comprises a ridge inwardly of its periphery. This ridge can act to stiffen the heater plate. This is particularly advantageous when the plate is very thin e.g. 0.2 mm, as is preferred. Moreover by providing a ridge the thermal conduction path to the periphery of the plate is lengthened so that less heat is conducted towards the vessel wall.

In some preferred embodiments the heater plate comprises a second ridge inwardly of the first ridge, the second ridge accommodating a sheathed heating element. In these embodiments it is preferable that the first ridge is higher than the second ridge. This means that heat radiated outwardly from the element ridge can be absorbed by the first ridge rather than being able to radiate across to the vessel wall. Heat absorbed by the first ridge will be conducted to the periphery of the heater plate where it can be preferentially absorbed by the thermal mass rather than excessively heating the material of the vessel wall.

To reduce the costs involved in the overall manufacture of a liquid heating vessel, the material and manufacture of a separate clamping means may, as described above, even be chosen to provide a cheaper alternative to a vessel in which a standard heater plate provides a peripheral channel for clamping the plate to the vessel wall, even if it is not of reduced thickness.

From a further aspect, therefore, the invention provides a clamping means as defined by claim 13 for grippingly receiving and clamping together the lower wall portion of the liquid heating vessel and the peripheral portion of the heater plate.

The clamping means is separate to the heater plate and has the advantages as hereinbefore described. Preferably it comprises mild steel, preferably coated with zinc.

The clamping means may be of any shape suitable for clamping together a heater plate and a liquid heating vessel wall, however in most cases the heater plate will be circular so it is preferable that the clamping means is arcuate in shape. The clamping means may comprise separate arcuate sections which may then be spaced around the perimeter of a heater plate, but it is preferable to provide a single ring so that the heater plate is clamped around substantially its whole periphery.

The clamping means may clamp together a vessel wall portion and a peripheral portion of a heater by any suitable contact, which may be a point, a plurality of points, a straight edge, or a toothed edge. Preferably, the clamping means comprises two or more clamping surfaces to maximise the area of contact with the parts being clamped. The clamping surfaces may be smooth, or they may be textured to further increase the surface area and to aid gripping and clamping. In a preferred embodiment the clamping means comprises opposed clamping surfaces extending substantially upwardly to grip and clamp together a downwardly extending wall portion of a vessel and a downwardly extending peripheral portion of a heater plate.

The clamping surfaces could be continuous so that they continuously contact the parts being clamped. Preferably though one or more of the clamping surfaces comprises a plurality of discrete clamping elements. The advantage of such an arrangement is that it allows the clamping means to be formed from a straight strip which can then be bent round into a ring.

The clamping means is preferably therefore formed from a strip comprising at least one series of longitudinally spaced and laterally extending tabs, such that the tabs may be bent to form the strip into a channel. The tabs would therefore define a plurality of discrete clamping elements as described above. By bending a strip to form an arcuate clamping means the material wastage in forming the clamping means is minimised compared to, for example, stamping out a ring of material. The bending of the channel into an arcuate shape is aided by the tabs.

Preferably the strip comprises an elongate continuous portion. The strip may comprise tabs on either side of the continuous portion so that when bent into a channel the tabs define the two side walls of the channel. Preferably however tabs are provided only on one side of the continuous portion. This means that, when the strip is bent into a channel, the continuous portion can form one of the side walls whilst the tabs are bent to form both the base and the other side wall of the channel. This is advantageous because a channel is more easily bent into an arcuate section or ring when its base is not continuous. It will be appreciated that when bending the channel the curvature is accommodated by the tabs moving closer together along the radially inner base and side wall.

The strip may be bent into arcuate sections or preferably a ring before it is formed into a channel, but preferably the channel is formed first and then bent.

The tabs may be formed by stamping, scoring, perforating or cutting the strip. The strip may be cut to the required length with a simple hand tool by cutting through the strip at a position between the tabs. The series of tabs therefore makes it easier to cut through the strip than if it were wholly continuous.

Some preferred embodiments of the present invention will now be described, by way of example only, with reference to the accompanying drawings in which:
Fig. 1 shows a section through a heater plate and separate clamp ring in accordance with the invention;
Fig. 2 shows a section through a clamp ring receiving a lower wall portion of a liquid heating vessel and a peripheral portion of a heater plate;
Fig. 3 shows a section through a lower wall portion of a liquid heating vessel and a peripheral portion of a heater plate clamped together;
Fig. 4 shows a section through a clamp ring in another embodiment of the invention;
Fig. 5 shows part of a clamp ring embodying the invention;
Fig. 6 shows a plan view of a strip for forming the clamp ring of Fig. 5;
Fig. 7 shows a section through a clamp ring formed by bending the strip of Fig. 6;
Fig. 8 shows part of an alternative form of clamp ring;
Fig. 9 shows a plan view of another embodiment of a strip for forming a clamp ring;
Fig. 10 shows part of a clamp ring formed by bending the strip of Fig. 9;
Fig. 11 shows a section through a portion of another heater plate and clamp ring in accordance with the invention;
Fig. 12 shows the heater plate of Fig. 11 on its own; and
Fig. 13 shows a section through the heater plate of Fig. 11 with a sheathed heating element mounted thereto.

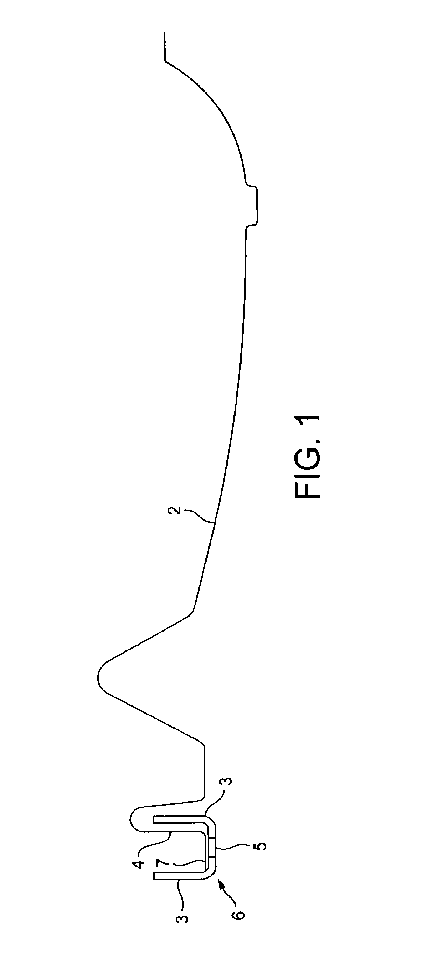

With reference to Fig. 1, a circular heater plate 2 is shown which is made of stainless steel 0.15-0.4 mm thick and which is designed to close an opening in the base of a liquid heating vessel (not shown). The L-shaped peripheral portion 4 of the heater plate 2 is received in a clamp ring 6 having a U-shaped channel cross-sectional shape similar to the periphery of a standard Sure Seal heater plate. The horizontal outer limb 7 of the peripheral portion 4 lies flat against the base 5 of the clamp ring 6. The clamp ring 6 is made of 0.8-1.2 mm thick Zintec which is therefore significantly thicker than the stainless steel heater plate 2 (although this difference is exaggerated in the Figures for emphasis).

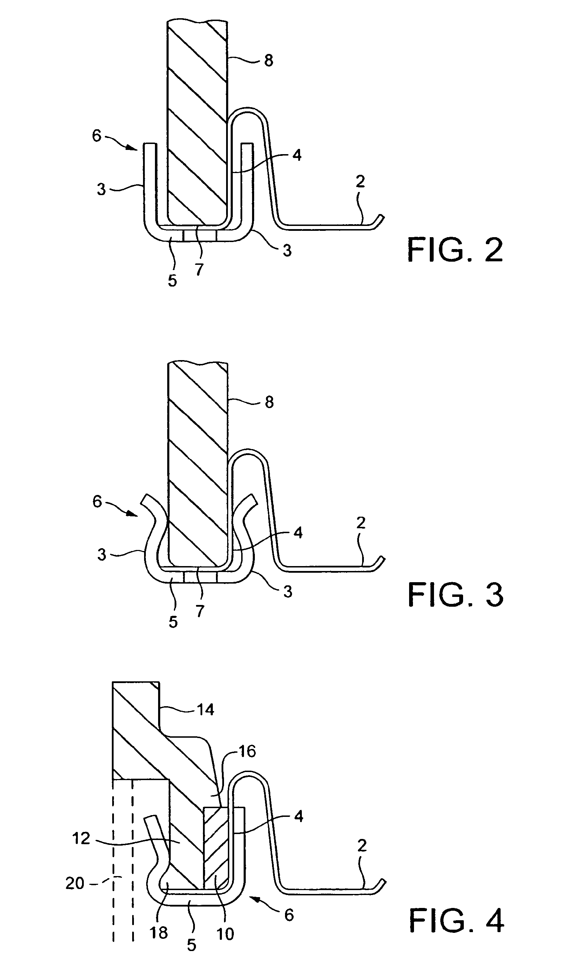

Fig. 2 shows a plastics downwardly extending lower wall portion 8 of a liquid heating vessel received in the clamp ring 6 on top of the outer limb 7. Fig. 3 shows the clamp ring 6 after it has been crimped so that the plastics wall portion 8 and the peripheral portion 4 of the stainless steel heater plate 2 are gripped and clamped together tightly by the strength of the mild steel clamp ring 6. The stainless steel plate 2 therefore does not need to extend out to form a crimping channel for the wall portion 8, as a result of the separate Zintec clamp ring 6, and the plate can have a thickness of 0.4 mm or less without affecting the robustness of the heater mounting.

Fig. 4 shows a second embodiment in which a rectangular section silicone rubber sealing ring 10 is grippingly received and clamped between a lower wall portion 12 of a vessel wall 14 and the peripheral portion 4 of the heater plate by the clamp ring 6. In this embodiment the lower wall portion 12 is formed with a shoulder 16 which acts to locate the sealing ring 10. The lower wall portion 12 is also formed with an outside bead 18 against which the clamp 6 is crimped. It will be appreciated that the sealing ring 10 thermally insulates the plastics vessel wall 12 from the heater plate 2.

In the arrangements described above, the clamp ring 6 could instead be shaped into separate arcuate sections rather than form a complete ring.

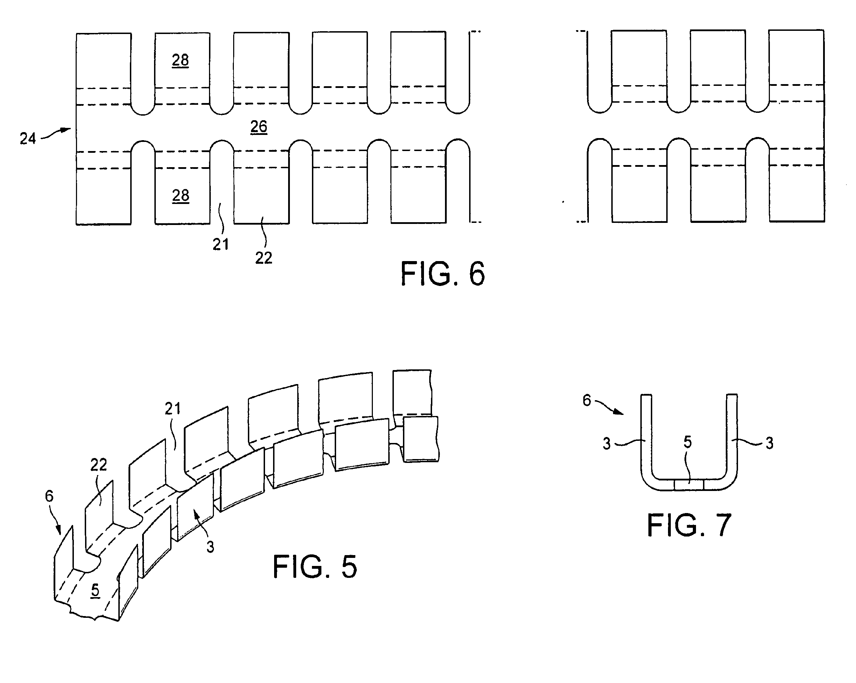

Fig. 5 shows part of a clamp ring 6. The walls 3 of the clamp ring 6 comprise a circumferentially spaced series of upwardly extending tabs 22 with gaps 21 in between thereby forming the opposing walls 3 of the channel 6. The gaps 21 extend laterally into the base 5 of the clamp ring 6, thereby reducing the width of the continuous base portion so that the channel is easily bent into a ring by narrowing the gaps 21 in the base 5 at the radially inner wall and widening the gaps 21 in the base 5 at the radially outer wall. The tabs 22 also allow the clamp 6 to be removed more easily than if the walls 3 were continuous.

A Zintec strip 24 for forming a clamp ring 6 is shown in Fig. 6. The strip has a continuous central portion 26 and elongate edge portions 28 which have slots 21 that define the series of tabs 22. The clamp ring channel 6 may be U-shaped in cross-section, as shown in Fig. 7, with the upwardly bent tabs 22 forming the walls 3 of the clamp 6.

The strip 24 allows an arcuate or ring-shaped clamp 6 to be formed while avoiding the material wastage associated with stamping out curves or rings from a sheet material.

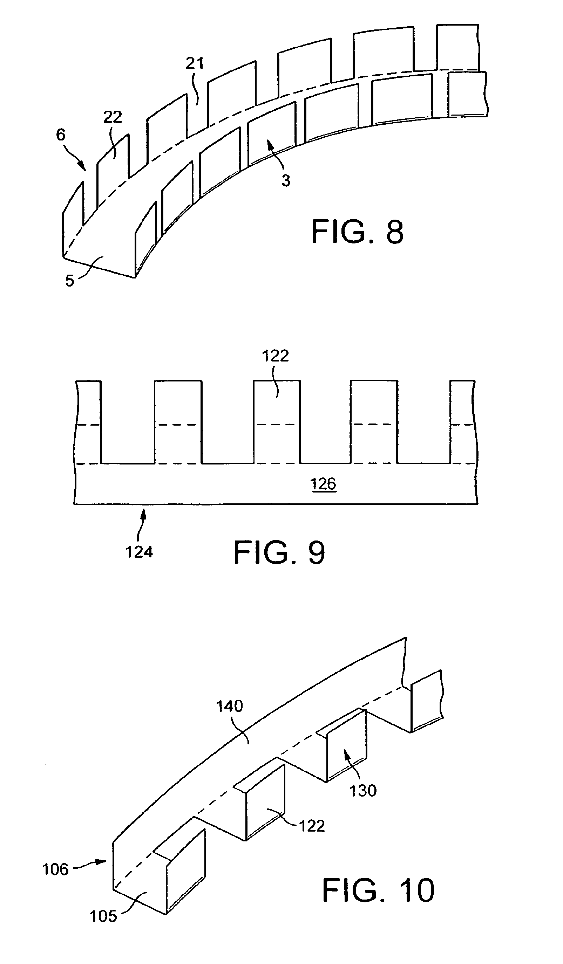

An alternative form of clamp ring channel 6 is shown in Fig. 8 wherein the gaps 21 do not extend into the base 5 so that the base 5 is continuous. However, this arrangement does not have the advantage of gaps 21 in the base 5 facilitating the bending of the channel 6 into a ring.

Figs. 9 shows an alternative Zintec strip 124 for forming a clamp ring 106 as shown in Fig. 10. In this embodiment the strip 124 comprises a continuous elongate portion 126 and a series of tabs 122. The tabs 122 are bent to form the strip into a U-shaped clamp ring channel 106 with the continuous portion 126 forming one side wall 140 of the clamp ring channel 106 and the tabs 122 forming the base 105 and other side wall 130. In this embodiment the base 105 of the clamp ring 106 is more easily bent into its arcuate shape because it is discontinuous across its entire width.

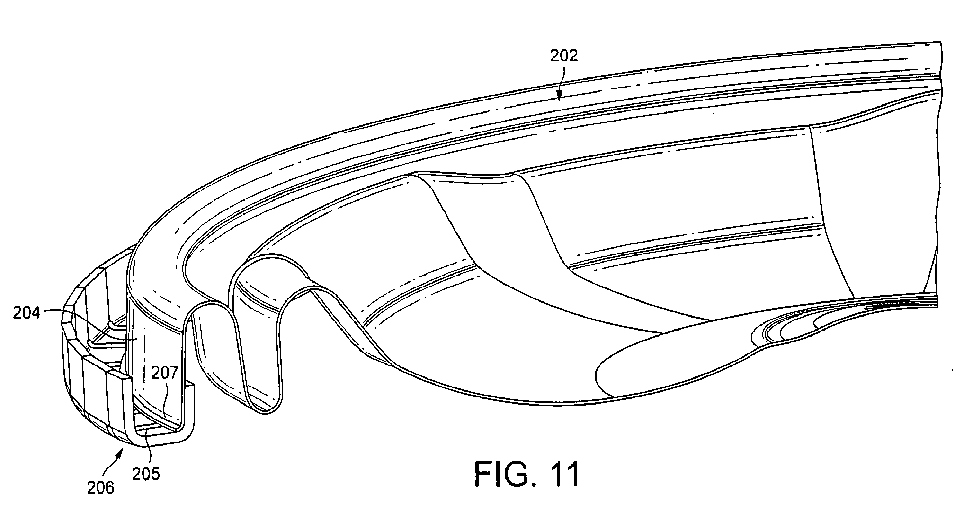

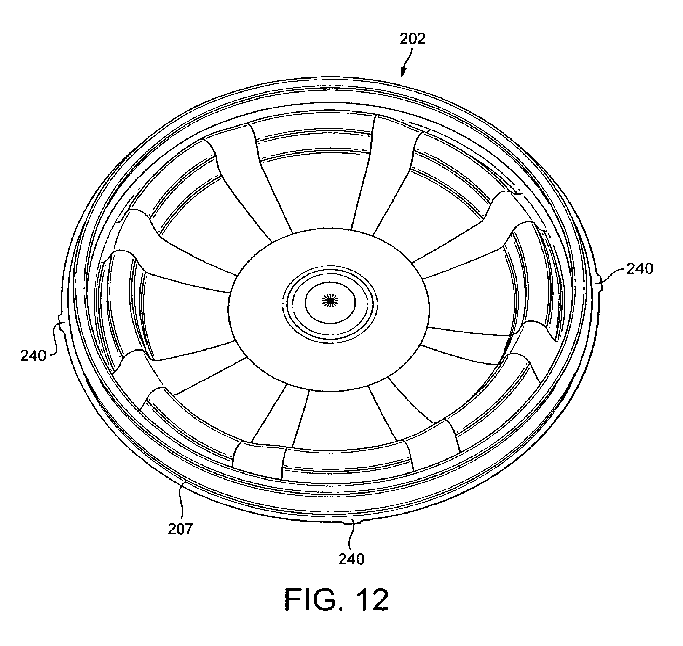

There is shown in Fig. 11 a section through a portion of a circular heater plate 202 which is made of stainless steel having a thickness in the range 0.15-0.4 mm and which is designed to close an opening in the base of a liquid heating vessel (not shown). The peripheral wall portion 204 of the heater plate 202 depends downwardly into a clamp ring 206 having an asymmetric U-shaped channel cross-sectional shape. It will be seen that in this embodiment the peripheral wall portion 204 of the plate is provided with a horizontal outer lip 207 which rests against the base 205 of the clamp ring 206. As is shown more clearly in Fig. 12, the outer lip 207 of the plate 202 is provided with a number of tabs 240 spaced around the circumference of the plate 202. These tabs 240 extend radially so as to engage beneath a lower portion of the vessel wall (not shown). Only a few of these tabs 240 are required so that there is a material saving in having the lip 207 instead of the horizontal limb of a complete annular flange extending across the base 205 of the clamp ring 206.

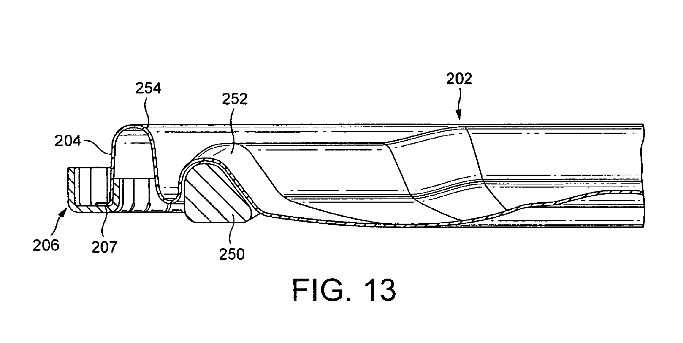

Fig. 13 illustrates the heater plate 202 with a sheathed heating element 250 attached to its underside. It will be seen that the cross-sectional shape of the sheathed element 250 is not circular but rather is a generally triangular bullet shape with an apex on the upper side thereof i.e. that which is nearest the water. Furthermore the element 250 is accommodated in a correspondingly shaped ridge 252 in the heater plate 202.

Outwardly of the element ridge 252 there is a peripheral ridge 254 whose outer wall terminates in the peripheral wall portion 204 that depends downwardly into the clamp ring 206. The peripheral ridge 254 advantageously acts to lengthen the thermal conduction path along the heater plate 202 from the element 250 to a vessel wall held in the clamp ring 206. This helps to keep the peripheral wall portion 204 of the plate 202 cool and to limit the conduction of heat into the vessel wall.

It will be seen that in at least some parts of the heater plate 202, the peripheral ridge 254 is higher than the element ridge 252. This means that heat radiated from the element ridge 252 in the plate will be preferentially absorbed by the material of the peripheral ridge 254 before it reaches the vessel wall. The absorbed heat will be conducted down the peripheral portion 204 and preferentially absorbed by the metal clamp ring 206 rather than by the plastics vessel wall.

It will be appreciated that whilst a circular plate and arcuate clamp have been described in the preferred embodiments, the invention is not limited to such and is intended to encompass other shapes of plate and clamp, for example rectangular plates and straight clamps. Furthermore, the clamp may not necessarily be U-shaped in cross-section but may have corrugations in its walls and/or base.

## Claims

1. A liquid heating vessel comprising a heater plate (2; 202) for closing an opening in the base of the vessel and clamping means (6; 206) separate from the heater plate, **characterised in that** the clamping means (6; 206) comprises two or more opposed clamping surfaces extending substantially upwardly to grippingly receive and clamp together a downwardly extending lower portion of the vessel wall (8) and a downwardly extending peripheral portion (4; 204) of the heater plate (2; 202)

2. A liquid heating vessel as claimed in claim 1 wherein the heater plate (2; 202) is made of stainless steel.

3. A liquid heating vessel as claimed in claim 1 or 2 wherein the thickness of the heater plate (2; 202) is substantially equal to or less than 0.4 mm.

4. A liquid heating vessel as claimed in claims 1, 2 or 3 further comprising a sealing means (10) clamped against a peripheral portion of the heater plate (2; 202).

5. A liquid heating vessel as claimed in claim 4 wherein the sealing means (10) is clamped between the lower vessel wall portion (8) and a peripheral portion of the heater plate (2; 202).

6. A liquid heating vessel as claimed in any preceding claim wherein said peripheral portion (4; 204) of the heater plate (2; 202) comprises a downwardly depending portion having a lip (7; 207).

7. A liquid heating vessel as claimed in claim 6 wherein said lip (7; 207) comprises one or more tabs for engagement beneath the lower portion of the vessel wall (8).

8. A liquid heating vessel as claimed in any preceding claim wherein the clamping means (6; 206) is made of a different material to the heater plate (2; 202).

9. A liquid heating vessel as claimed in any preceding claim wherein the clamping means (6; 206) is made of a different material to the vessel wall (8) so as to preferentially to absorb heat from the heater plate (2; 202).

10. A liquid heating vessel as claimed in any preceding claim wherein the heater plate (2; 202) comprises a first ridge (254) inwardly of its periphery.

11. A liquid heating vessel as claimed in claim 10 wherein the heater plate (2: 202) comprises a second ridge (252) inwardly of said first ridge (254), said second ridge (252) accommodating a sheathed heating element (250).

12. A liquid heating vessel as claimed in claim 11 wherein said first ridge (254) is higher than said second ridge (252).

13. A clamping means (6; 206) for use in a liquid heating vessel according to any preceding claim, said clamping means comprising two or more opposed clamping surfaces extending substantially upwardly to grippingly receive and clamp together the lower wall portion (8) of the liquid heating vessel and the peripheral portion (2; 204) of the heater plate (2; 202).

14. A liquid heating vessel or a clamping means as claimed in any preceding claim wherein the clamping means (6; 206) comprises steel.

15. A liquid heating vessel or clamping means as claimed in any preceding claim wherein the clamping means (6; 206) is arcuate in shape.

16. A liquid heating vessel or clamping means as claimed in any preceding claim wherein the clamping means (6; 206) is formed into a ring.

17. A liquid heating vessel or clamping means as claimed in any preceding claim wherein one or more of the clamping surfaces comprises a plurality of discrete clamping elements (22).

18. A liquid heating vessel or clamping means as claimed in any preceding claim wherein the clamping means (6; 206) is formed from a strip (24) comprising at least one series of longitudinally spaced and laterally extending tabs (22).

19. A liquid heating vessel or clamping, means as claimed in claim 18, wherein said strip comprises an elongate continuous portion (26).

20. A liquid heating vessel or clamping means as claimed in claim 18 or 19, wherein the tabs (22) are provided only on one side of the continuous portion (26).

21. A liquid heating vessel as claimed in claim 1 or 2 wherein the thickness of the heater plate (2; 202) is substantially equal to 0.2 mm.

## Patentansprüche

1. Flüssigkeitserhitzungsgefäß mit einer Heizplatte (2; 202) zum Schließen einer Öffnung in der Basis des Gefäßes und einem Klemmmittel (6; 206), das von der Heizplatte getrennt ist; **dadurch gekennzeichnet, dass** das Klemmmittel (6; 206) zwei oder mehr einander gegenüberliegende Klemmflächen umfasst, die sich im Wesentlichen nach oben erstrecken, um einen sich nach unten erstreckenden unteren Teil der Gefäßwand (8) und einen sich nach unten erstreckenden Umfangsteil (4; 204) der Heizplatte (2; 202) greifend aufzunehmen und zusammenzuklemmen.

2. Flüssigkeitserhitzungsgefäß nach Anspruch 1, wobei die Heizplatte (2; 202) aus rostfreiem Stahl hergestellt ist.

3. Flüssigkeitserhitzungsgefäß nach Anspruch 1 oder 2, wobei die Dicke der Heizplatte (2; 202) im Wesentlichen gleich oder kleiner als 0,4 mm ist.

4. Flüssigkeitserhitzungsgefäß nach den Ansprüchen 1, 2 oder 3, das weiterhin ein Dichtungsmittel (10) umfasst, das an einen Umfangsteil der Heizplatte (2; 202) geklemmt ist.

5. Flüssigkeitserhitzungsgefäß nach Anspruch 4, wobei das Dichtungsmittel (10) zwischen dem unteren Gefäßwandteil (8) und einem Umfangsteil der Heizplatte (2; 202) festgeklemmt ist.

6. Flüssigkeitserhitzungsgefäß nach einem vorhergehenden Anspruch, wobei der Umfangsteil (4; 204) der Heizplatte (2; 202) einen nach unten hängenden Teil mit einer Lippe (7; 207) umfasst.

7. Flüssigkeitserhitzungsgefäß nach Anspruch 6, wobei die Lippe (7; 207) eine oder mehrere Nasen zum Untergreifen des unteren Teils der Gefäßwand (8) umfasst.

8. Flüssigkeitserhitzungsgefäß nach einem vorhergehenden Anspruch, wobei das Klemmmittel (6; 206) aus einem anderen Material als die Heizplatte (2; 202) hergestellt ist.

9. Flüssigkeitserhitzungsgefäß nach einem vorhergehenden Anspruch, wobei das Klemmmittel (6; 206) aus einem anderen Material als die Gefäßwand (8) hergestellt ist, um Wärme von der Heizplatte (2; 202) vorzugweise zu absorbieren.

10. Flüssigkeitserhitzungsgefäß nach einem vorhergehenden Anspruch, wobei die Heizplatte (2; 202) eine erste Rippe (254) einwärts ihres Umfangs umfasst.

11. Flüssigkeitserhitzungsgefäß nach Anspruch 10, wobei die Heizplatte (2; 202) eine zweite Rippe (252) einwärts der ersten Rippe (254) umfasst, wobei die zweite Rippe (252) ein ummanteltes Heizelement (250) aufnimmt.

12. Flüssigkeitserhitzungsgefäß nach Anspruch 11, wobei die erste Rippe (254) höher ist als die zweite Rippe (252).

13. Klemmmittel (6; 206) zur Verwendung in einem Flüssigkeitserhitzungsgefäß nach einem vorhergehenden Anspruch, wobei das Klemmmittel zwei oder mehr einander gegenüberliegende Klemmflächen umfasst, die sich im Wesentlichen nach oben erstrecken, um den unteren Wandteil (8) des Flüssigkeitserhitzungsgefäßes und den Umfangsteil (2; 204) der Heizplatte (2; 202) greifend aufzunehmen und zusammenzuklemmen.

14. Flüssigkeitserhitzungsgefäß oder Klemmmittel nach einem vorhergehenden Anspruch, wobei das Klemmmittel (6; 206) Stahl umfasst.

15. Flüssigkeitserhitzungsgefäß oder Klemmmittel nach einem vorhergehenden Anspruch, wobei das Klemmmittel (6; 206) eine Bogenform aufweist.

16. Flüssigkeitserhitzüngsgefäß oder Klemmmittel nach einem vorhergehenden Anspruch, wobei das Klemmmittel (6; 206) zu einem Ring geformt ist.

17. Flüssigkeitserhitzungsgefäß oder Klemmmittel nach einem vorhergehenden Anspruch, wobei eine oder mehrere der Klemmflächen mehrere getrennte Klemmelemente (22) umfasst.

18. Flüssigkeitserhitzungsgefäß oder Klemmmittel nach einem vorhergehenden Anspruch, wobei das Klemmmittel (6; 206) aus einem Streifen (24) gebildet ist, der mindestens eine Reihe von in Längsrichtung beabstandeten und sich lateral erstreckenden Nasen (22) umfasst.

19. Flüssigkeitserhitzungsgefäß oder Klemmmittel nach Anspruch 18, wobei der Streifen einen länglichen durchgehenden Teil (26) umfasst.

20. Flüssigkeitserhitzungsgefäß oder Klemmmittel nach Anspruch 18 oder 19, wobei die Nasen (22) nur an einer Seite des durchgehenden Teils (26) vorgesehen sind.

21. Flüssigkeitserhitzungsgefäß nach Anspruch 1 oder 2, wobei die Dicke der Heizplatte (2; 202) im Wesentlichen gleich 0,2 mm ist.

## Revendications

1. Bouilloire comprenant une plaque chauffante (2 ; 202) pour fermer une ouverture dans la base du récipient et un moyen de serrage (6 ; 206) séparé de la plaque chauffante, **caractérisée en ce que** le moyen de serrage (6 ; 206) comprend deux ou plusieurs surfaces de serrage opposées s'étendant substantiellement vers le haut pour recevoir par engagement et serrer ensemble une portion inférieure s'étendant vers le bas de la paroi du récipient (8) et une portion périphérique s'étendant vers le bas (4 ; 204) de la plaque chauffante (2 ; 202).

2. Bouilloire selon la revendication 1, dans laquelle la plaque chauffante (2 ; 202) est fabriquée en acier inoxydable.

3. Bouilloire selon la revendication 1 ou 2, dans laquelle l'épaisseur de la plaque chauffante (2 ; 202) est substantiellement égale ou inférieure à 0,4 mm.

4. Bouilloire selon l'une quelconque des revendications 1, 2 ou 3, comprenant en outre un moyen de scellage (10) serré contre une portion périphérique de la plaque chauffante (2 ; 202).

5. Bouilloire selon la revendication 4, dans laquelle le moyen de scellage (10) est serré entre la portion de paroi de récipient inférieure (8) et une portion périphérique de la plaque chauffante (2 ; 202).

6. Bouilloire selon l'une quelconque des revendications précédentes, dans laquelle ladite portion périphérique (4 ; 204) de la plaque chauffante (2 ; 202) comprend une portion descendant vers le bas ayant une lèvre (7 ; 207).

7. Bouilloire selon la revendication 6, dans laquelle ladite lèvre (7 ; 207) comprend une ou plusieurs languettes destinées à s'engager sous la portion inférieure de la paroi du récipient (8).

8. Bouilloire selon l'une quelconque des revendications précédentes, dans laquelle le moyen de serrage (6 ; 206) est fabriqué en un matériau différent de la plaque chauffante (2 ; 202).

9. Bouilloire selon l'une quelconque des revendications précédentes, dans laquelle le moyen de serrage (6 ; 206) est fabriqué en un matériau différent de la paroi du récipient (8) de manière à absorber en préférence la chaleur provenant de la plaque chauffante (2 ; 202).

10. Bouilloire selon l'une quelconque des revendications précédentes, dans laquelle la plaque chauffante (2 ; 202) comprend une première arête (254) vers l'intérieur de sa périphérie.

11. Bouilloire selon la revendication 10, dans laquelle la plaque chauffante (2 ; 202) comprend une deuxième arête (252) vers l'intérieur de ladite première arête (254), ladite deuxième arête (252) recevant un élément chauffant gainé (250).

12. Bouilloire selon la revendication 11, dans laquelle ladite première arête (254) est plus haute que ladite deuxième arête (252).

13. Moyen de serrage (6 ; 206) destiné à être utilisé dans une bouilloire selon l'une quelconque des revendications précédentes, ledit moyen de serrage comprenant deux ou plusieurs surfaces de serrage opposées s'étendant substantiellement vers le haut pour recevoir par engagement et serrer ensemble la portion de paroi inférieure (8) de la bouilloire et la portion périphérique (4 ; 204) de la plaque chauffante (2 ; 202).

14. Bouilloire ou moyen de serrage selon l'une quelconque des revendications précédentes, dans laquelle ou lequel le moyen de serrage (6 ; 206) se compose d'acier.

15. Bouilloire ou moyen de serrage selon l'une quelconque des revendications précédentes, dans laquelle ou lequel le moyen de serrage (6 ; 206) a une forme arquée.

16. Bouilloire ou moyen de serrage selon l'une quelconque des revendications précédentes, dans laquelle ou lequel le moyen de serrage (6 ; 206) a une forme annulaire.

17. Bouilloire ou moyen de serrage selon l'une quelconque des revendications précédentes, dans laquelle ou lequel une ou plusieurs des surfaces de serrage comprend une pluralité d'éléments de serrage discrets (22).

18. Bouilloire ou moyen de serrage selon l'une quelconque des revendications précédentes, dans laquelle ou lequel le moyen de serrage (6 ; 206) est en forme de bande (24) comprenant au moins une série de languettes (22) longitudinalement espacées et s'étendant latéralement.

19. Bouilloire ou moyen de serrage selon la revendication 18, dans laquelle ou lequel ladite bande est constituée d'une portion continue allongée (26).

20. Bouilloire ou moyen de serrage selon la revendication 18 ou 19, dans laquelle ou lequel les languettes (22) sont prévues uniquement sur un côté de la portion continue (26).

21. Bouilloire selon la revendication 1 ou 2, dans laquelle l'épaisseur de la plaque chauffante (2 ; 202) est substantiellement égale à 0,2 mm.
